# EUROPÄISCHE PATENTSCHRIFT

(11) **EP 0 904 980 B1**
(45) Veröffentlichungstag und Bekanntmachung des Hinweises auf die Patenterteilung: **30.06.2004**
(21) Anmeldenummer: 98113359.8
(22) Anmeldetag: 17.07.1998
(51) Int. Cl.: B60Q 1/00, B60Q 1/28

(54) **Befestigungssystem für eine Blinkleuchte**
Attachment device for a flashing light
Dispositif de fixation d'un feux clignotant

(30) Priorität: 27.09.1997 DE 19742816
(43) Veröffentlichungstag der Anmeldung: 31.03.1999
(73) Patentinhaber: Volkswagen Aktiengesellschaft, 38436 Wolfsburg (DE)
(72) Erfinder: Klein, Roland, 38442 Wolfsburg (DE)
(74) Vertreter: Rabe, Andreas

(56) Entgegenhaltungen:
- EP-A- 0 504 626
- EP-B- 0 624 492
- DE-U- 9 007 203
- GB-A- 1 539 304

## Beschreibung

Die Erfindung betrifft ein Befestigungssystem für eine an einem Fahrzeug neben einem Scheinwerfer angeordnete Blinkleuchte unter Verwendung eines Spannelementes zur Fixierung der Blinkleuchte an Anlageflächen, die am Rand einer neben dem Scheinwerfer angeordneten Karosserieaussparung und am Scheinwerfer ausgebildet sind.

Gegenstand der DE 42 37 162 C1 ist eine Scheinwerfer-Blinkleuchteneinheit für Kraftfahrzeuge, die als Einheit vormontiert in eine Karosserieöffnung einsetzbar und an der Karosserie befestigbar ist. Die Lichtscheiben des Scheinwerfers und der Blinkleuchte sind an ihrer Vorderseite durch einen Spalt voneinander getrennt, und die Blinkleuchte ist um ein am Scheinwerfer ausgebildetes Schwenklager mit im wesentlichen vertikaler Schwenkachse verschwenkbar gehalten. Zur Befestigung der Blinkleuchte am Schwenklager, das aus einer am Scheinwerfer ausgebildeten Hohlkehle und einer in diese eingreifenden und an der Blinkleuchte ausgebildeten Kammkante gebildet ist, und an am Rand der Karosserieöffnung ausgebildeten Anlageflächen ist ein zwischen der Blinkleuchte und dem Scheinwerfer wirkendes Zugfederelement angeordnet, das die Blinkleuchte an die Anlageflächen zieht. Justiermittel zu Justieren der Blinkleuchte gegenüber dem Scheinwerfer und der Karosserie in vertikaler Richtung, insbesondere zum Ausgleich von Fertigungstoleranzabweichungen, sind nicht vorgesehen.

Aus der DE 32 42 245 C1 ist eine Scheinwerfer-Leuchten-Einheit bekannt, bei der die Blinkleuchte nach der Montage des Scheinwerfers seitlich neben diesem in eine dafür vorgesehene Karosserieaussparung eingesetzt und durch eine an ihrer Rückseite befestigte Zugfeder zur Rückseite der Einheit hin gegen Zentrierelemente und Anschläge an der Karosserie und einem mit dem Scheinwerfer gemeinsamen einstellbaren Anschlag gezogen wird und dadurch fixiert ist. Durch Verstellen des gemeinsamen Anschlages kann die Anordnung der Blinkleuchte gegenüber dem Scheinwerfer korrigiert werden.

Auch die DE 90 072 03 U1 beschreibt ein Befestigungssystem für eine Blinkleuchte. Bei diesem ist die Blinkleuchte an einem Karosserieteil über eine formschlüssige Verbindung positioniert und gehalten und stützt sich mittels angeformter Federarme am Scheinwerfer ab und ist über ein verstellbares Befestigungselement mit dem Scheinwerfergehäuse schwenkbar verbunden und wird durch die Federarme zum Karosserieteil hin gedrückt. Am Leuchtengehäuse kann ein in Einschubrichtung weisender Arm angeordnet sein, der in eine Führung am Scheinwerfergehäuse eingreift.

In der EP 0 624 492 B1 ist eine Montagevorrichtung für eine neben einem Scheinwerfer anzuordnende Blinkleuchte beschrieben, die aus scheinwerferseitig an der Blinkleuchte angeordneten Führungs- und Verriegelungselementen für am Scheinwerfer entsprechend ausgebildete Aufnahmen gebildet ist, wobei der Rand des die Karosserieaussparung für die Blinkleuchte bildenden Karosseriebleches als Anschlag dient. Die Montagevorrichtung ist horizontal ausgerichtet und läßt eine gewisse Schwenkbewegung der Blinkleuchte nach der Verriegelung um eine vertikale Achse zu.

In der GB 1 539 304 ist eine Anordnung beschrieben, bei der ein Scheinwerfer neben einer Blinkleuchte angeordnet ist.

Schließlich ist in der EP 0 504 626 A1 ein Befestigungssystem nach dem Oberbegriff des Anspruchs 1 beschrieben.

Es ist Aufgabe der Erfindung, ein Befestigungssystem für eine Blinkleuchte nach dem Oberbegriff des Anspruchs 1 zu schaffen, durch das eine Positionierung der Blinkleuchte in horizontaler und vertikaler Richtung auf einfache Weise gegeben ist.

Diese Aufgabe wird bei einem Befestigungssystem nach dem Oberbegriff des Anspruchs 1 mit dessen kennzeichnenden Merkmalen gelöst.

Das Befestigungssystem weist zwischen dem Scheinwerfer und der Blinkleuchte in Fahrzeuglängsrichtung ausgebildete Führungsmittel für die von vom und in Fahrzeuglängsrichtung in eine Karosserieaussparung einzuführende Blinkleuchte und Justiermittel zur vertikalen Justierung der Blinkleuchte gegen eine am Karosserieblech ausgebildete Anlagefläche, ein vertikales und karosserieseitig ausgebildetes Schwenklager und zwischen dem Scheinwerfer und der Blinkleuchte ausgebildete Anlageflächen sowie Spannmittel auf, mit denen die in vertikaler Richtung und in Fahrzeuglängsrichtung positionierte Blinkleuchte gespannt gehaltert und, am Schwenklager mit einem Drehmoment in Richtung auf den Scheinwerfer beaufschlagt, in Anlage am Scheinwerfer gehalten ist.

Durch dieses Befestigungssystem wird die Blinkleuchte auf einfache Weise am Karosserieblech in vertikaler und in horizontaler Richtung positioniert und durch das Spannmittel in dieser Position in horizontaler Richtung am Karosserieblech und am Scheinwerfer kraftbeaufschlagt fixiert.

Dabei können erfindungsgemäß die Führungsmittel aus wenigstens einer am Scheinwerfer auf der der Blinkleuchte zugewandten Seite angeordneten Führungstasche und einer in diese eingreifenden und scheinwerferseitig an der Blinkleuchte angeordneten Zunge gebildet sein.

Die Justiermittel können vorteilhaft an den Führungsmitteln ausgebildet sein, um den Herstellungs- und auch den Montageaufwand zu senken. Dabei können die Justiermittel aus einem an der Führungstasche oder der Zunge angeordneten Federelement und einem am jeweils anderen Führungselement ausgebildeten Widerlager für das Federelement bestehen, wobei letzteres in vertikaler Richtung wirkend zwischen den beiden Führungselementen angeordnet ist und die Blinkleuchte gegen eine am Karosserieblech ausgebildete Anlagefläche drückt. Dadurch wird die mit der (den) Zunge(n) in die Führungstasche(n) geschobene Blinkleuchte auf einfache Weise in vertikaler Richtung zur Anlage am Karosserieblech gebracht und auch horizontal justiert, vorausgesetzt, daß die Zunge ein ausreichendes Spiel in vertikaler Richtung in der Führungstasche hat, so daß ein Anlegen der Blinkleuchte am Karosserieblech vor einem Anstoßen der Zunge an die die Führungstasche nach oben begrenzende Führungsfläche sichergestellt ist.

Aus konstruktiven Gründen ist es dabei zweckmäßig, das Federelement als U-förmiges Blattfederelement auszubilden und an der Führungstasche derart anzuordnen, daß es mit einem Schenkel in Fahrzeuglängsrichtung in die Führungstasche ragt und in vertikaler Richtung auf die eingeschobene Zunge wirkt und mit dem anderen Schenkel an der unteren horizontalen Wandung der Führungstasche fixiert ist, beispielsweise durch eine Klemmverbindung.

Zur Sicherstellung der Zuverlässigkeit der Positionierung der Blinkleuchte in der Karosserieaussparung neben dem Scheinwerfer ist es vorteilhaft, zwei im vertikalen Abstand angeordnete Zungen für zwei am Scheinwerfer korrespondierend zu diesen angeordnete Führungstaschen vorzusehen. Dabei braucht jedoch nur eine mit einem Blattfederelement ausgestattet zu sein. Bei dieser Ausführung muß jedoch darauf geachtet werden, daß die zweite Führungstasche wenigstens so viel vertikales Spiel wie die mit dem Blattfederelement ausgestattete aufweist, damit ein Anlegen der Blinkleuchte an der im wesentlichen horizontal ausgebildeten Anlagefläche der Karosserie ermöglicht ist.

Als Spannmittel kann ein zwischen der Blinkleuchte und dem Scheinwerfer wirkendes Zugfederelement eingesetzt sein. Dieses muß so an der Blinkleuchte angelenkt sein, daß ein Drehmoment erzeugt wird, das die Blinkleuchte um die Schwenkachse in Richtung auf den Scheinwerfer beaufschlagt und an diesem an der ausgebildeten Anlagefläche federkraftbeaufschlagt arretiert. Zur Anlage kann die Blinkleuchte am Leuchtenglas auf der der Anlagefläche am Scheinwerfer zugewandten Seite Noppen aufweisen.

Die Blinkleuchte kann des weiteren an ihrer Deckwandung mit Anschlägen zur vertikalen Anlage an der Anlagefläche der Karosserie versehen sein.

Das Schwenklager wird auf einfache Weise durch an der Blinkleuchte ausgebildete Arretierungsflächen gebildet, die zur Anlage mit dem vertikalen Blechrand der Karosserieaussparung bringbar sind und die die Blinkleuchte mit Spiel an diesem derart arretieren, daß sie in horizontaler Ebene um den Blechrand schwenkbar ist.

Die Erfindung wird nachstehend anhand eines Ausführungsbeispiels erläutert. In der zugehörigen Zeichnung zeigen schematisch und teilweise geschnitten:
- Fig. 1:: einen Horizontalschnitt durch eine an einem Scheinwerfer in einer Karosserieaussparung mit dem erfindungsgemäßen Befestigungssystem angeordnete Blinkleuchte (Fig. 2: Schnitt I-I),
- Fig. 2:: eine Seitenansicht der Blinkleuchte (Fig. 1, Schnitt II-II) und
- Fig. 3:: eine Frontansicht der Blinkleuchte.

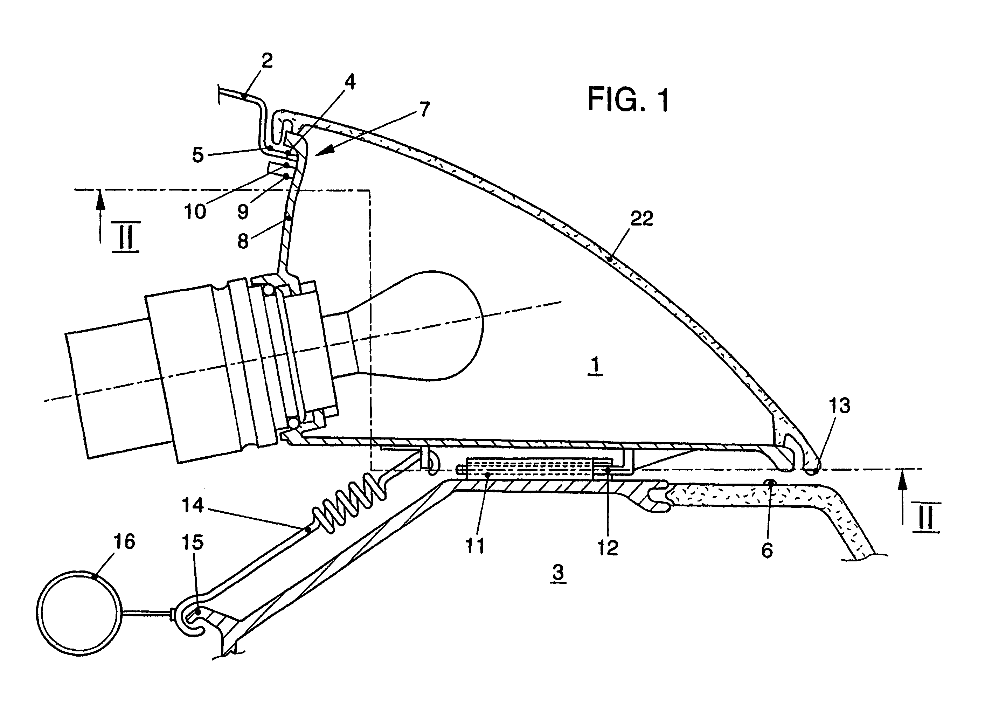

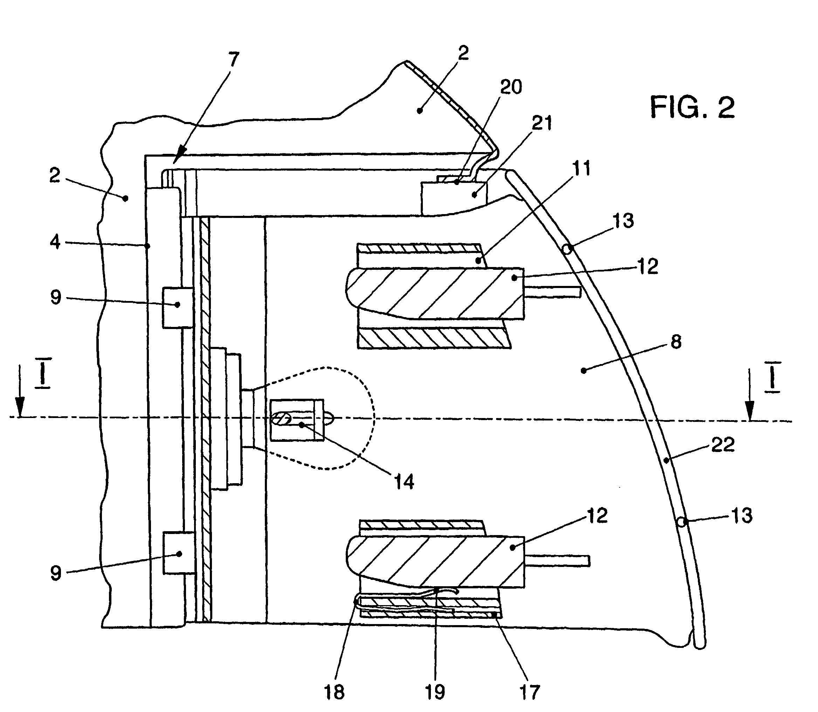

Die in Fig. 1 dargestellte Blinkleuchte 1 ist in einer Karosserieaussparung (Karosserieblech 2) neben einem Scheinwerfer 3 angeordnet, wobei das Karosserieblech 2 eine an einem vertikalen Blechrand 4 gegebene Anlagefläche 5 und der Scheinwerfer 3 eine vertikale Anlagefläche 6 für die Blinkleuchte 1 aufweisen. Der Blechrand 4 stellt zugleich ein Lagerelement eines vertikalen Schwenklagers dar, mit dem die Blinkleuchte mit einem aus dem vertikalen abgewinkelten Rand des Blinkleuchtengehäuses 8 und im Abstand zu diesem angeordneten Anschlägen 9 mit Arretierungsflächen 10 gebildeten (Gegen-) Lagerelementes in Eingriff steht (auch Fig. 2). Zwischen dem Scheinwerfer 3 und der Blinkleuchte 1 sind in Fahrzeuglängsrichtung Führungsmittel für letztere ausgebildet, die aus zwei am Scheinwerfer 3 blinkleuchtenseitig in vertikalem Abstand angeordneten Führungstaschen 11 und in diese mit horizontalem und vertikalem Spiel eingreifenden und scheinwerferseitig am Blinkleuchtengehäuse 8 angeformten Zungen 12 gebildet sind. Das vertikale Spiel der oberen Zunge 12 ist gegenüber der oberen Wandung der Führungstasche 11 größer als das der unteren Zunge in der unteren Führungstasche. Die Blinkleuchte 1 ist mit zwei Noppen 13 (Fig. 2) durch ein zwischen dieser und dem Scheinwerfer 3 wirkendes Zugfederelement (14), das an der Blinkleuchte 1 angeordnet und an einem am Scheinwerfer 3 ausgebildeten Widerlager 15 unter Spannung eingehängt ist und einen Betätigungsring 16 dafür aufweist, in Anlage an der am Scheinwerfer 3 vertikal ausgebildeten Anlagefläche 6 gehalten, wobei die Blinkleuchte 1 durch das Zugfederelement 14 um das Schwenklager 7 im Uhrzeigersinn federkraftbeaufschlagt ist.

In Fig. 2 sind insbesondere die Führungsmittel 11 und 12 im Schnitt dargestellt. Die untere Führungstasche 11 weist ein in ihrer unteren Wandung 17 festgeklemmtes U-förmiges Blattfederelement 18 auf, dessen einer Schenkel 19 in die Führungstasche ragt und mit der eingeführten Zunge 12 als Widerlager in Wirkverbindung steht und ein in vertikaler Richtung wirkendes Justiermittel bildet. Durch dieses wird die Blinkleuchte 1 an einer im wesentlichen horizontal ausgebildeten Anlagefläche 20 am Karosserieblech 2 in Anlage gehalten. Zur Anlage weist das Blinkleuchtengehäuse 8 zwei bockartige im Abstand angeordnete Anlageelemente 21 auf. Fig. 2 zeigt auch die beiden am Blinkleuchtengehäuse 8 ausgebildeten Anschläge 9.

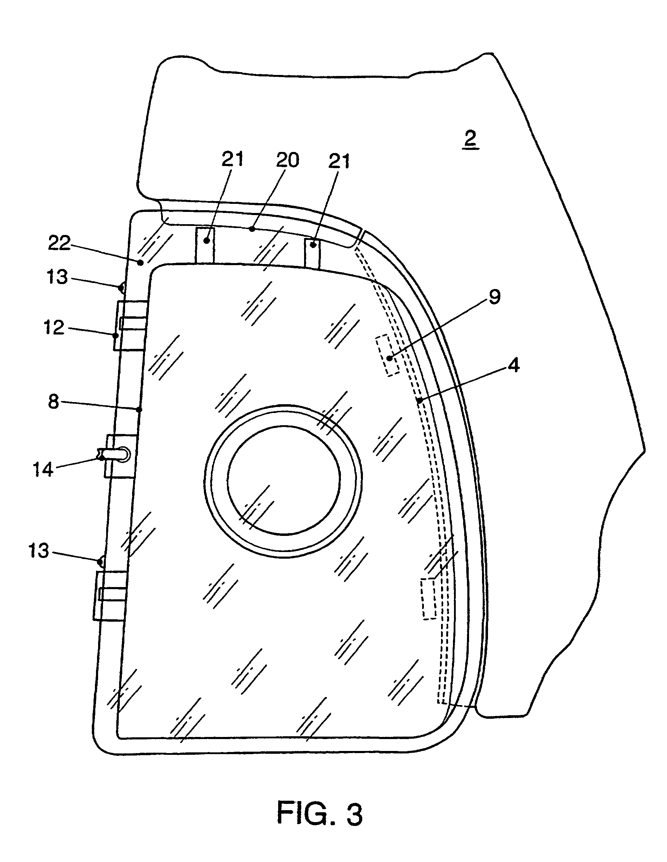

In Fig. 3 sind - durch das Blinkleuchtenglas 22 betrachtet - die Anlageelemente 21 in Anlage an der Anlagefläche 20 und die mit dem Blechrand 4 zusammenwirkenden Anschläge 9 gezeigt (gestrichelt dargestellt).

Zur ihrer Montage wird die Blinkleuchte 1 in Fahrzeuglängsrichtung in die zwischen dem Scheinwerfer 3 und dem Karosserieblech 2 gegebene Karosserieaussparung eingeführt, wobei die beiden Zungen 12 in die Führungstaschen 11 eingreifen. Dabei gelangt die untere Zunge 12 in Eingriff mit dem Blattfederelement 18 und wird mit der Blinkleuchte 1 nach oben gedrückt, bis die beiden Anschläge 21 an der Anschlagfläche 20 anschlagen. Auf Grund des größeren vertikalen Spiels der oberen Zunge 12 in der oberen Führungstasche 11 kann dieses Anschlagen nicht verhindert werden. Die Blinkleuchte 1 wird so weit eingeschoben, bis das Blinkleuchtengehäuse 8 am vertikalen Blechrand 4 anstößt, wobei dieser in eine durch die Anschläge 9 und eine Abwinklung der Gehäusewandung gebildete Nut mit Spiel in Eingriff mit der Blinkleuchte 1 gelangt. Anschließend wird das Zugfederelement 14 gespannt und auf das Widerlager 15 gehängt. Dadurch wird die Blinkleuchte 1 am Blechrand 4 arretiert und im Uhrzeigersinn (Fig. 1) federkraftbeaufschlagt, so daß die Noppen 13 an die Anlagefläche 6 des Scheinwerfers 3 gedrückt werden. Damit ist die Blinkleuchte 1 in horizontaler und in vertikaler Richtung justiert und in ihrer vorbestimmten Position befestigt.

## Patentansprüche

1. Befestigungssystem für eine Blinkleuchte (1 ), die in einer Karosserieaussparung neben einem Scheinwerfer (3) angeordnet ist, mit an der Karosserie (2) und am Scheinwerfer (3) ausgebildeten Anlageflächen, einem vertikalen Schwenklager (7) und einem Spannmittel (14), wobei zwischen dem Scheinwerfer (3) und der Blinkleuchte (1) in Fahrzeuglängsrichtung ausgebildete Führungsmittel (11, 12) für die Blinkleuchte (1) und Justiermittel (18) zur vertikalen Justierung derselben an der Karosserieaussparung ausgebildet sind, das vertikale Schwenklager (7) karosserieseitig ausgebildet ist und die Blinkleuchte (1) durch das Spannmittel (14), am Schwenklager (7) durch ein Drehmoment kraftbeaufschlagt, in Anlage am Scheinwerfer (3) gehalten ist, **dadurch gekennzeichnet, daß** die Führungsmittel wenigstens eine am Scheinwerfer (3) blinkleuchtenseitig angeordnete Führungstasche (11) und eine in diese eingreifende und scheinwerferseitig an der Blinkleuchte (1) ausgebildete Zunge (12) sind und daß die Justiermittel aus einem an der Führungstasche (11) oder der Zunge (12) angeordneten Federelement (18) und einem am jeweils anderen Führungselement (12, 11) ausgebildeten Widerlager für das Federelement (18) bestehen.

2. Befestigungssystem nach Anspruch 1, **dadurch gekennzeichnet, daß** das Widerlager, in vertikaler Richtung wirkend, zwischen der Führungstasche (11) und der Zunge (12) angeordnet ist und die Blinkleuchte (1) gegen eine am Karosserieblech (2) ausgebildete Anlagefläche (20) drückt.

3. Befestigungssystem nach Anspruch 1 oder 2, **dadurch gekennzeichnet, daß** das Federelement an der Führungstasche (11) angeordnet und ein Blattfederelement (18) ist.

4. Befestigungssystem nach Anspruch 3, **dadurch gekennzeichnet, daß** das Blattfederelement (18) U-Form hat und mit einem Schenkel (19) in die Führungstasche (11) ragt und mit dem anderen in der Wandung (17) derselben (11) fixiert ist.

5. Befestigungssystem nach einem der Ansprüche 1 bis 4, **dadurch gekennzeichnet, daß** die Blinkleuchte (1) zwei in vertikaler Richtung im Abstand angeordnete Zungen (12) für zwei am Scheinwerfer (3) entsprechend angeordnete Führungstaschen (11) aufweist, von denen nur eine mit einem Blattfederelement (18) ausgestattet ist.

6. Befestigungssystem nach Anspruch 1, **dadurch gekennzeichnet, daß** das Spannmittel ein zwischen der Blinkleuchte (1) und dem Scheinwerfer (3) wirkendes Zugfederelement (14) ist.

7. Befestigungssystem nach einem der Ansprüche 1, 5 oder 6, **dadurch gekennzeichnet, daß** die Blinkleuchte (1) ein Leuchtenglas (22) aufweist, an dem Noppen (13) zur Anlage am Scheinwerfer (3) ausbebildet sind.

8. Befestigungssystem nach Anspruch 1 oder 2, **dadurch gekennzeichnet, daß** die Blinkleuchte (1) an ihrer Deckwandung Anschläge (21) zur Anlage an der Anlagefläche (20) an der Karosserie aufweist.

9. Befestigungssystem nach Anspruch 1, **dadurch gekennzeichnet, daß** das Schwenklager (7) aus an der Blinkleuchte (1) ausgebildeten Arretierungsflächen (10) und dem vertikalen Blechrand (4) gebildet ist, die miteinander in Eingriff stehen.

## Claims

1. Fastening system for a direction-indicator lamp (1) which is arranged in a body cutout next to a headlight (3), having bearing surfaces which are formed on the body (2) and on the headlight (3), a vertical pivot bearing (7) and a clamping means (14), with guide means (11, 12), which are formed between the headlight (3) and the direction-indicator lamp (1) in the longitudinal direction of the vehicle, being formed for the direction-indicator lamp (1) and adjusting means (18) for the vertical adjustment of the said direction-indicator lamp being formed on the body cutout, the vertical pivot bearing (7) being formed on the body, and the direction-indicator lamp (1), subjected to a force by a torque on the pivot bearing (7), being kept in abutment against the headlight (3) by the clamping means (14), **characterized in that** the guide means are at least one guide pocket (11), which is arranged on the direction-indicator-lamp side of the headlight (3), and a tongue (12) which engages in the said guide pocket and is formed on the headlight side of the direction-indicator lamp (1), and **in that** the adjusting means comprise a spring element (18), which is arranged on the guide pocket (11) or the tongue (12), and an abutment for the spring element (18), which abutment is formed on the other guide element (12, 11) in each case.

2. Fastening system according to Claim 1, **characterized in that** the abutment, acting in the vertical direction, is arranged between the guide pocket (11) and the tongue (12) and presses the direction-indicator lamp (1) against an abutment surface (20) formed on the body sheet (2).

3. Fastening system according to Claim 1 or 2, **characterized in that** the spring element is arranged on the guide pocket (11) and is a leaf spring element (18).

4. Fastening system according to Claim 3, **characterized in that** the leaf spring element (18) has a U shape and protrudes with one limb (19) into the guide pocket (11) and with the other limb is fixed in the wall (17) of the same.

5. Fastening system according to one of Claims 1 to 4, **characterized in that** the direction-indicator lamp (1) has two tongues (12) which are arranged at a distance in the vertical direction for two guide pockets (11) which are correspondingly arranged on the headlight (3) and only one of which is equipped with a leaf spring element (18).

6. Fastening system according to Claim 1, **characterized in that** the clamping means is a tension spring element (14) which acts between the direction-indicator lamp (1) and the headlight (3).

7. Fastening system according to one of Claims 1, 5 or 6, **characterized in that** the direction-indicator lamp (1) is a lamp lens (22) on which nubs (13) for abutting against the headlights (3) are formed.

8. Fastening system according to Claim 1 or 2, **characterized in that** the direction-indicator lamp (1) has stops (21) on its covering wall for abutment against the abutment surface (20) on the body.

9. Fastening system according to Claim 1, **characterized in that** the pivot bearing (7) is formed from locking surfaces (10), which are formed on the direction-indicator lamp (1), and the vertical sheet edge (4), which are in engagement with one another.

## Revendications

1. Système de fixation pour un feu clignotant (1) disposé dans un logement de la carrosserie à côté d'un phare (3), avec des faces d'appui réalisées contre la carrosserie (2) et contre le phare (3), un palier pivotant vertical (7) et un moyen de tensionnement (14), des moyens de guidage (11, 12) pour le feu clignotant (1) réalisés dans la direction longitudinale du véhicule entre le phare (3) et le feu clignotant (1) et des moyens d'ajustement (18) pour l'ajustement vertical de ceux-ci étant réalisés sur le logement de la carrosserie, le palier pivotant vertical (7) étant réalisé du côté de la carrosserie et le feu clignotant (1), sollicité par la force du moyen de tensionnement (14) par un couple sur le palier pivotant (7), étant maintenu en appui contre le phare (3), **caractérisé en ce que** les moyens de guidage sont au moins une poche de guidage (11) disposée du côté du feu clignotant sur le phare (3) et une lame (12) réalisée du côté du phare sur le feu clignotant (1) et venant en prise dans cette poche de guidage, et **en ce que** les moyens d'ajustement se composent d'un élément de ressort (18) disposé contre la poche de guidage (11) ou contre la lame (12) et d'une butée pour l'élément de ressort (18) réalisée sur l'autre élément de guidage respectif (12, 11).

2. Système de fixation selon la revendication 1, **caractérisé en ce que** la butée, agissant dans la direction verticale, est disposée entre la poche de guidage (11) et la lame (12) et presse le feu clignotant (1) contre une face d'appui (20) réalisée sur la tôle de la carrosserie (2).

3. Système de fixation selon la revendication 1 ou 2, **caractérisé en ce que** l'élément de ressort est disposé sur la poche de guidage (11) et est un élément de ressort à lame (18).

4. Système de fixation selon la revendication 3, **caractérisé en ce que** l'élément de ressort à lame (18) a une forme en U et pénètre avec une branche (19) dans la poche de guidage (11) et est fixé avec l'autre dans la paroi (17) de celle-ci (11).

5. Système de fixation selon l'une quelconque des revendications 1 à 4, **caractérisé en ce que** le feu clignotant (1) présente deux lames (12) espacées dans la direction verticale pour deux poches de guidage (11) disposées de manière correspondante sur le phare (3), dont seulement une est équipée d'un élément de ressort à lame (18).

6. Système de fixation selon la revendication 1, **caractérisé en ce que** le moyen de tensionnement est un élément de ressort de traction (14) agissant entre le feu clignotant (1) et le phare (3).

7. Système de fixation selon l'une quelconque des revendications 1, 5 ou 6, **caractérisé en ce que** le feu clignotant (1) présente un verre d'éclairage (22), sur lequel sont réalisés des bossages (13) pour l'applique contre le phare (3).

8. Système de fixation selon la revendication 1 ou 2, **caractérisé en ce que** le feu clignotant (1) présente sur sa paroi de couvercle des butées (21) destinées à venir en appui contre la face d'appui (20) sur la carrosserie.

9. Système de fixation selon la revendication 1, **caractérisé en ce que** le palier pivotant (7) est formé à partir de faces de blocage (10) réalisées sur le feu clignotant (1) et du bord en tôle vertical (4), lesquels sont en engagement mutuel.
